# EUROPÄISCHE PATENTANMELDUNG

(11) **EP 2 174 715 A1**
(43) Veröffentlichungstag der Anmeldung: **14.04.2010**
(21) Anmeldenummer: 09012852.1
(22) Anmeldetag: 10.10.2009
(51) Int. Cl.: B01L 3/02, G01N 1/31, G01N 1/40, G01N 1/34, G01N 35/10

(54) **Pipettenspitze mit Trennmaterial**

(30) Priorität: 13.10.2008 EP 08017904
(71) Anmelder: Roche Diagnostics GmbH, 68308 Mannheim (DE); F.HOFFMANN-LA ROCHE AG, 4070 Basel (CH)
(72) Erfinder: Harttig, Herbert, 67434 Neustadt67434 Neustadt (DE); Ruhstorfer, Maximilian, 6006 Luzern (CH); Victor, Martin, 82515 Wolfratshausen (DE); Walter, Thomas, 82377 Penzberg (DE)

(57) **Zusammenfassung**

Die vorliegende Erfindung stellt einen Aufsatz bzw. eine Erweiterung für Pipetten und Pipettenspitzen zur Verfügung. Der Aufsatz umfasst Trennmaterialien, die bevorzugt geignet sind für die Isolierung von Nukleinsäuren aus Flüssigkeiten. In Form einer Filterscheibe liegen die Trennmaterialien in einer Halterung vor, die das Pipettenvolumen nur in geringem Ausmaß vergrößert und dadurch wenig Totvolumen erzeugt.

## Beschreibung

Die vorliegende Erfindung stellt einen Aufsatz bzw. eine Erweiterung für Pipetten und Pipettenspitzen zur Verfügung. Der Aufsatz umfasst Trennmaterialien, die bevorzugt geignet sind für die Isolierung von Nukleinsäuren aus Flüssigkeiten. In Form einer Filterscheibe liegen die Trennmaterialien in einer Halterung vor, die das Pipettenvolumen nur in geringem Ausmaß vergrößert und dadurch wenig Totvolumen erzeugt.

### Hintergrund

Gegenwärtig werden Nukleinsäuren mittels Silica-Vlies, Glas-Partikeln oder Ionenaustauscher-Matrizes gereinigt. Was Vliese betrifft, können diese in einzelnen, zentrifugierbaren Säulen oder Filter-Platten (96 oder 384 Kavitäten) manuell oder automatisiert isoliert werden. Magnetseparation von magnetischen Glaspartikelen ist ebenfalls manuell oder in verschiedenen automatisierten Ausführungsformen realisiert, beispielsweise mit 6, 8, 32, 48 oder 96 Proben per batch. Hierbei erfolgt die Magnetseparation in einem Reaktionsgefäß oder einer Pipettenspitze.

Es sind beim jeweiligen Verfahren zusätzliche Schritte zum reinen Transfer von Flüssigkeiten erforderlich. Diese umfassen Schritte wie Zentrifugation, Filtration, Magnetseparation oder Extraktion. Dadurch entsteht ein erheblicher Zeit- und Geräteaufwand. Besonders die Automatisierung im Hochdurchsatzformat wird durch entsprechende Gerätemodule sehr viel aufwendiger, teurer, wartungsanfälliger und länger hinsichtlich des zeitlichen Ablaufs.

Es sind bereits Pipettenspitzen bekannt, die zur Reinigung von Analyten verwendet werden. Ein Beispiel hierfür sind die unter dem Namen PrepTip vermarkteten Produkte der Firma Harvard Biosience, die auch in US 6,416,716 beschrieben sind. Hier wurde die Wand der Pipettenspitze am unteren Auslass mit bestimmten affinen Materialen beschichtet. In einer anderen Ausführungsform wird chemisch modifiziertes Kunststoffmaterial zur Herstellung (Spritzguss) der Pipettenspitze verwendet, so dass die Wand der Pipettenspitze affine Gruppen für die Bindung von Analyten aufweißt. Beiden Ausfuhrungsformen ist gemein, dass die Fläche zur Bindung der Analyten im Vergleich zu heute verwendeten porösen Membranen relativ gering ist. Auch sind die Diffusionswege beim Vorbeistreichen der Analysenlösung relativ groß, so dass die Ausbeute an gereinigtem Analyt zu niedrig ist und hohen Anforderungen an Ausbeute nicht genügt.

Andere Pipettenspitzen sind mit der Festphase am unteren Auslass gefüllt. Die Verwendung ist z.B. für die Gelchromatographie von DNA Sequenzier-Reaktionen zur Abtrennung von überschüssigen Fluoreszenz-Markierten Nukleotiden, die eine nachfolgende Analyse stören können. Ein Beispiel ist in US 6,048,457 aufgeführt. Die National Scientific Supply Company bietet so genannte BioPack MicroColumn QuickKits an. Diese Pipettenspitzen sind in der Spitze mit Chromatographiematerial gefüllt. Hier ist zwar die verfügbare Oberfläche zur Bindung des Analyten vergrößert, aber durch das ebenfalls große Kapillarvolumen des Chromatographiematerials kommt es zur Verschleppung von Verunreinigungen aus der Proben und der verwendeten Lösungen und Reagenzien in das Eluat welches den gereinigten Analyten enthält.

Das Dokument DE 102005053463 beschreibt eine Vorrichtung und Verfahren zur automatisierten Isolierung und Aufreinigung von Nukleinsäuren. Das Dokument EP 1882524 einen filtrationsaufsatz mit einem großvolumigen Filtereinsatz. Dokument US 2006/0182657 A1 offenbart eine Kombination aus einem gestanzten Filter, auf das eine Flüssigprobe aufgebracht wurde, und einem Pipettenaufsatz.

Ziel der vorliegenden Erfindung war es daher, die Nachteile des Standes der Technik durch Verbesserungen zu vermeiden.

Erfindungsgemäß werden an sich bekannte poröse Festphasen mit affinen Gruppen zur Adsorbtion von Nukleinsäuren oder anderen Analyten quer zur Strömungsrichtung der Flüssigkeit von außen vor die Auslassöffnung einer Pipette angesetzt oder in den Auslass einer Wechselspitze eingebaut. Beim Durchströmen der Festphase adsorbieren die Nukleinsäuren oder auch anderen Analyten unter bekannten Puffer-Bedingungen. Das Lysat wird wieder ausgestoßen und verworfen. Durch Aspirieren von Waschlösungen wird der an der Festphase adsorbierte Analyt weiter gereinigt. Zum Schluss wird der Analyt von der Festphase desorbiert und in einem kleinen Elutionsvolumen in konzentrierter Form gewonnen.

Durch die besondere Ausführungsform der Pipettenspitze wird eine besonders effektive Konzentrierung des Analyten erreicht. Die Integration von Flüssigkeitstranfer einerseits und Adsorbtion, Reinigung und Elution des Analyten andererseits ermöglicht ein verbessertes schnelles und einfaches Verfahren. Dieses kann nicht nur in manueller Art und Weise angewendet werden sondern auch in einfacher Form an bekannten Laborautomaten realisiert werden. Gängige Pipettenspitzen für Einzel- oder Mehrkanal-Pipetten oder Pipettenspitzen, die in gängigen Pipettier-Robotern verwendet werden, sind erfindungsgemäß zur Herstellung erfindungsgemäßer Vorrichtungen verwendbar.

### Zusammenfassung der Erfindung

In einem ersten Aspekt beinhaltet die Erfindung eine Vorrichtung umfassend eine Pipette (C) und einen Körper mit den direkt aneinander anschließenden Abschnitten (A) und (B), wobei wobei der Körper an den zwei am weitesten voneinander entfernten gegenüber liegenden und quer zur Längsachse (L) angeordneten Seiten offen ist und das Durchströmen von Flüssigkeit entlang der Längsachse durch die erste Öffnung hin zur zweiten Öffnung und durch diese erlaubt; Abschnitt (A) eine im Wesentlichen zylindrische Wand (100) umfasst, die zu einer Seite hin ohne Verengung offen ist und die die erste Öffnung in Abschnitt (A) bildet; die erste Öffnung in Abschnitt (A) fluidisch verbunden ist mit der Austrittsöffnung der Pipette (C); im Abschnitt (B) die der ersten Öffnung gegenüber liegende Seite duch eine weitere Wand (210) begrenzt wird, wobei die Wand (210) sich an die Wand (100) anschließt und mittig eine kreisförmige zweite Öffnung bildet, die von einer im wesentlichen zylindrischen Wand (200) umgeben ist, wobei die Wand (200) einen geringeren Durchmesser als die Wand (100) aufweist; quer zur Längsachse (L) in Abschnitt (A) ein scheibenförmiges Filter (600) angeordnet ist und das Filter eine Festphase mit affinen Gruppen auf ihrer Oberfläche (affine Festphase) enthält; im Abschnitt (B) die der ersten Öffnung gegenüber liegende Seite duch eine weitere Wand (210) begrenzt wird, wobei die Wand (210) sich an die Wand (100) anschließt und mittig eine kreisförmige zweite Öffnung bildet, die von einer im wesentlichen zylindrischen Wand (200) umgeben ist, wobei die Wand (200) einen geringeren Durchmesser als die Wand (100) aufweist; das in Abschnitt (B) zwischen der Filterscheibe (600) und der zweiten Öffnung befindliche Volumen (300) im Bereich von 0.01% bis 5% des maximalen Transfervolumens der Pipettenspitze beträgt; und im Abschnitt (B) der Durchmesser der zweiten Öffnung im Bereich von 0,5 mm bis 2 mm mißt **dadurch gekennzeichnet, dass** die erste Öffnung in Abschnitt (A) des Körpers fluidisch verbunden ist mit der Austrittsöffnung der Pipette (C).

Ein weiterer Aspekt der Erfindung ist die Verwendung der erfindungsgemäßen Vorrichtung zur Reinigung von Nukleinsäuren.

Ein weiterer Aspekt der Erfindung ist ein Verfahren zur Reinigung von Nukleinsäuren unter Verwendung einer erfindungsgemäßen Vorrichtung umfassend die Schritte (a) Ansaugen und Ausstoßen eines wässrigen Lysepuffers enthaltend (i) gelöste Nukleinsäuren und (ii) eine oder mehrere Substanzen, die eine Adsorption von Nukleinsäuren aus der Flüssigphase an eine zur reversiblen Bindung der Nukleinsäure geeignete Festphase fördern, wobei der Lysepuffer beim Ansaugen durch den Körper mit den Abschnitten (A) und (B) in die Pipette gelangt, diese beim Ausdrücken durch den besagten Körper wieder verlässt, und Nukleinsäuren während des Durchtritts der Flüssigphase durch das Filter an der Oberfläche der affinen Festphase adsorbiert werden; (b) Ansaugen und Ausstoßen eines Waschpuffers, wobei der Waschpuffer eine oder mehrere Substanzen enthält, die dem Ablösen der adsorbierten Nukleinsäuren von der Festphase entgegenwirken, und wobei der Waschpuffer beim Ansaugen durch den Körper mit den Abschnitten (A) und (B) in die Pipette gelangt, diese beim Ausdrücken durch den besagten Körper wieder verlässt, und Verunreinigungen während des Durchtritts der Flüssigphase durch das Filter in die Flüssigphase übertreten; (c) Ansaugen und Ausstoßen eines Elutionspuffers, wobei der Elutionspuffer das Ablösen von adsorbierten Nukleinsäuren von der Festphase bewirkt, und wobei der Elutionspuffer beim Ansaugen durch den Körper mit den Abschnitten (A) und (B) in die Pipette gelangt, diese beim Ausdrücken durch den besagten Körper wieder verlässt, und Nukleinsäuren während des Durchtritts der Flüssigphase durch das Filter in die Flüssigphase übertreten; (d) Auffangen des Eluates enthaltend die gereinigten Nukleinsäuren.

### Beschreibung der Erfindung

Für viele bioanalytische Prozesse ist es erforderlich, den zu untersuchenden Analyten vor der Messung aus der Probe zu reinigen und zu isolieren. Insbesondere auf dem Gebiet der Nukleinsäure-Isolierung stören Substanzen aus der Probe häufig die Messung und machen die Analyse ohne vorherige Aufreinigung des Analyten unmöglich. Daher wurden in den letzten Jahren viele Methoden und kommerzielle Kits für die Reinigung von Nukleinsäuren entwickelt. Diese werden für die manuelle und automatisierte Handhabung für Einzelproben bis zu der Verarbeitung von 96 oder sogar 384 Probenbatches angeboten. Hierbei ist ein Zeitaufwand von ca. 10 Minuten bis zu 2,5 Stunden und mehr erforderlich.

Nukleinsäuren sind Analyten von erheblicher Bedeutung, insbesondere in der medizinischen oder forensischen Diagnostik. Nukleinsäuren sind Bestandteile von biologischem Material, beispielsweise prokaryotischer und eukaryotischer Zellen oder Viren. Der Begriff biologisches Material wird im Zusammenhang mit der Beschreibung der vorliegenden Erfindung synonym mit dem Begriff Probenmaterial verwendet. Dieses umfasst außer dem vorgehend genannten Material auch biologische Flüssigkeiten wie beispielsweise Vollblut, Serum, Plasma, Urin, Sputum, Knochenmark, Liquor oder Lavage. Der Begriff Probenmaterial umfasst weiterhin Biopsiematerial, fixierte und nicht fixierte Gewebeproben sowie Homogenate davon und geklärte Überstände solcher Homogenate.

Beinahe jede Methode der Probenvorbereitung beinhaltet den Transfer von Flüssigkeiten mit einer Pipettenspitze. Es wird daher vorgeschlagen, in eine zum Transfer von Flüssigkeitsvolumina geeignete Pipettenspitze eine zur Immobilisierung des Analyten geeignete Festphase funktionell zu integrieren. Durch die Integration von Isolierung- und Reinigungsschritten in den notwendigen Transfer von flüssigem Probenmaterial und Reagenzien entfallen zusätzliche Gefäße, z.B. Zentrifugen-Säulchen, welche die Festphase enthalten. In einer anderen Ausführungsform nach dem Stand der Technik unter Verwendung von Partikeln als Festphase, können ebenfalls diese Partikel entfallen wie auch zusätzliche Gefäße zur Mischung und Separation der Partikel von der flüssigen Phase.

In einem ersten Aspekt beinhaltet die Erfindung eine Vorrichtung umfassend eine Pipette (C) und einen Körper mit den Abschnitten (A) und (B). Die Pipette verfügt über eine Austrittsöffnung und eine Öffnung in ihrem oberen Teil, wobei Flüssigkeiten durch die Austrittsöffnung in den Hohlraum der Pipette eingesaugt und von dort wieder ausgestoßen werden können. Die hierzu erforderlichen Druckänderungen wirken durch die Öffnung im oberen Teil der Pipette.

Um die beschriebenen Nachteile der bekannten funktionalisierten Pipettenspitzen zu überkommen, wird eine poröse dünne Membran, welche eine ausreichend hohe Bindekapazität für den Analyten zur Erreichung der geforderten Sensitivität aufweist, so in den Querschnitt der Pipettenspitze eingebracht, dass die gesamte Membran von der Analysenlösung durchströmt wird. Die Membran ist dabei so dünn, dass kein nennenswertes Flüssigkeit-Volumen in den Membran-Poren verbleiben kann. So werden auch bei den nachfolgenden Wasch-Schritten keine bedeutsamen Störsubstanzen aus den Reagenzien oder der Probe in das Eluat transferiert.

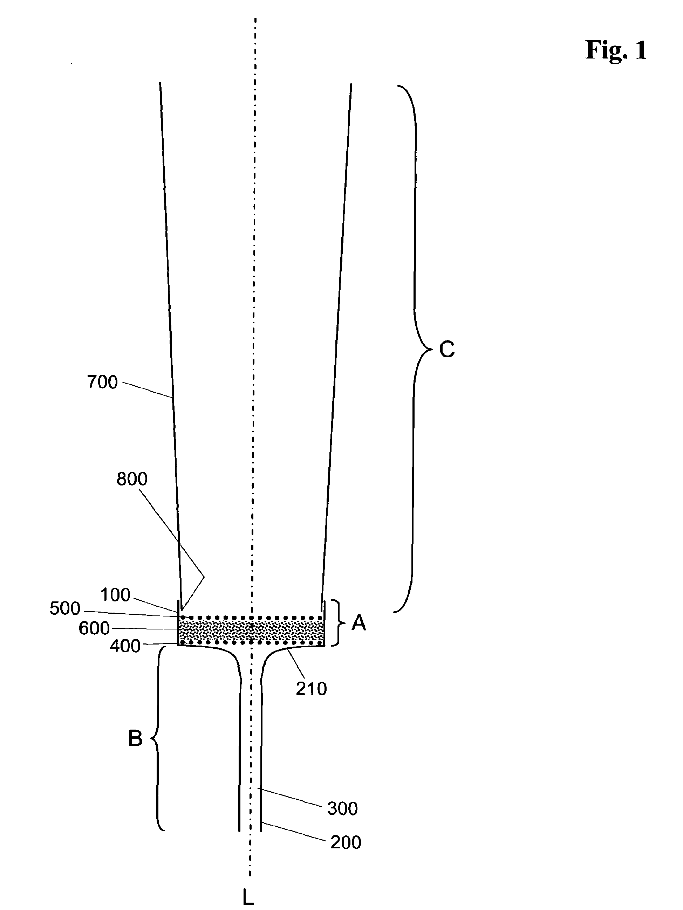

Besagter Körper in der erfindungsgemäßen Vorrichtung gliedert sich in die direkt aneinander anschließenden Abschnitte (A) und (B). An den zwei am weitesten voneinander entfernten gegenüber liegenden und quer zur Längsachse (L) angeordneten Seiten ist der Körper offen und erlaubt das Durchströmen von Flüssigkeit entlang der Längsachse durch die erste Öffnung hin zur zweiten Öffnung und durch diese hindurch. Abschnitt (A) umfasst eine im Wesentlichen zylindrische Wand (100) mit einer ersten Öffnung, die zu einer Seite hin ohne Verengung offen ist. Die der ersten Öffnung gegenüber liegende Seite im Abschnitt (B) wird duch eine weitere Wand (210) begrenzt, wobei diese Wand (210) sich an die Wand (100) anschließt und mittig eine kreisförmige zweite Öffnung bildet. Die zweite Offnung ist der ersten Öffnung gegenüber angeordnet. Sie wird von einer im wesentlichen zylindrischen Wand (200) umgeben, wobei die Wand (200) einen geringeren Durchmesser als die Wand (100) aufweist. Quer zur Längsachse (L) ist in Abschnitt (A) ein scheibenförmiges Filter (600) angeordnet. Das Filter enthält eine Festphase mit affinen Gruppen auf der Oberfläche (affine Festphase). Erfindungsgemäß ist die erste Öffnung des Körpers in Abschnitt (A) fluidisch mit der Austrittsöffnung (800) der Pipette(C) verbunden. Figur 1 illustriert die Anordnung der Elemente in der erfindungsgemäßen Vorrichtung entsprechend einer bevorzugten Ausführungsform.

Wesentlich für die Erfindung ist, dass die Nukleinsäuren in einem möglichst kleinen Eluatvolumen gewonnen werden, um den Analyten zur Erhöhung der Sensitivität zu konzentrieren und dem Bearbeiter die Möglichkeit zu geben, das Eluat möglichst vollständig in einen Test einzusetzen. Zu diesem Zweck wird einerseits das Volumen von Abschnitt (B) der erfindungsgemäßen Vorrichtung möglichst klein ausgeführt. Darüber hinaus verwendet man vorteilhaft eine Filterscheibe (600), die dünn ist, bevorzugt ist ein scheibenförmiges Filter mit einer Dicke im Bereich von 0,2 mm bis 2 mm. Gleichzeitig darf aber die verfügbare Fläche der Filterscheibe nicht zu klein werden, wie das z.B. beim Einbringen in den konisch zulaufenden unteren Auslauf von Pipettenspitzen der Fall ist. Wird die Membran weiter oben in der Spitze eingebracht, wo der volle Querschnitt der Pipettenspitze zur Verfügung steht verringert sich das zur Verfügung stehende Volumen der Pipettenspitze. Auch kann in diesem Fall nicht in einem möglichst kleinen Volumen eluiert werden, da der Meniskus eines kleinen Flüssigkeitsvolumens abreißt und der Unterdruck über der Flüssigkeit zusammenbricht. Die Flüssigkeit wird nicht weiter entgegen der Schwerkraft durch die Membran transportiert.

Besonders vorteilhaft ist, dass in der erfindungsgemäßen Vorrichtung ein (im Vergleich zu den bekannten Aufsätzen für Pipettenspitzen) stark reduziertes Flüssigkeitsvolumen ohne Unterbrechung durch Lufteinschlüsse bis hinter das Filter angesaugt und wieder ausgestoßen werden kann. Die in die Vorrichtung angesaugte Wassersäule kann dabei frei von Blasen eingesaugt werden.

Daher wird als Ausführungsform für die funktionelle Pipettenspitze ein Kunststoffteil vorgeschlagen welches im unteren Auslass sehr schmal ausläuft und sich kurz unterhalb der porösen Membran zu dem erforderlichen Querschnitt erweitert. Der untere Auslass ist dabei so lang, dass er bis zum Boden von herkömmlichen Deep-Well Mikrowellplatten reicht. So kommt es nicht zu einer Verdrängung der Flüssigkeit in der Vertiefung der Mikrowellplatte und auch nicht zu einem Aufsetzen des Tips auf den oberen Rand der Vertiefung bei zunehmendem Querschnitt des Tips. Bei dieser Ausführungsform kann nun ein kleines Volumen Elutions-Lösung in der schmalen Röhre aufgenommen werden und bis zu der zu durchströmenden Membran gefuhrt werden. Nach dem Durchströmen wird die Elutions-Lösung in ein sauberes Gefäß ausgestoßen. Produktionstechnisch kann es dazu nötig sein ein zweigeteiltes Tip zu fertigen um so die poröse Membran mit zusätzlichen Stützgittern einzubringen (sh. Zeichnung). Alternativ kann die Membran mit Stützkonstruktion von der oberen breiten Öffnung eingeführt werden. Bei zweiteiligen Tip werden die beiden Teile geklemmt und nicht verklebt um die Belegung der Membran mit Ausdünstungen aus Klebstoffen zu vermeiden. Diese Ausdünstungen verhindern die Adsorbtion von Nukleinsäuren auf funktionellen Membranen und Oberflächen.

In Abschnitt (B) des Körpers verjüngt sich die zweite Öffnung und läuft in einer bevorzugten Ausführungsform zu einem schmalen Kanal zusammen, wobei der Kanal mit der besagten zweiten Öffnung endet. Besonders bevorzugt beträgt das in Abschnitt (B) des Körpers zwischen der Filterscheibe (600) und der zweiten Öffnung befindliche Volumen (300) im Bereich von 0.01% bis 5% des maximalen Transfervolumens der Pipettenspitze. Dieses Volumen schließt den besagten Kanal ein. Noch mehr bevorzugt beträgt das Volumen (300) im Bereich von 0.01% bis 1% des maximalen Transfervolumens der Pipettenspitze. Ein wichtiger Vorteil eines möglichst geringen Volumens (300) liegt in der Minimierung von Reagenz-Verschleppung. Besonders bevorzugt ist daher ein schmaler, kurzer Kanal. Hinsichtlich der Viskosität der zu pipettierenden Flüssigkeiten sind der Enge des Kanals jedoch Grenzen gesetzt. Besonders bevorzugt beträgt der Durchmesser des Kanals und der zweiten Öffnung im Bereich von 2 mm bis 0.5 mm. Diese Dimensionen haben sich als besonders vorteilhaft erwiesen, insbesondere angesichts der Viskosität der durch die erfindungsgemäße Vorrichtung zu bewegenden Lösungen. So zeichnen sich beispielsweise bei der Reinigung von Nukleinsäuren vielfach verwendete Lösungen mit einem hohen Anteil an Guanidiniumsalzen durch eine erhöhte Viskosität aus. Der Fachmann wird in einem solchen Fall den Durchmesser des Kanals durch systematisches Experimentieren so wählen, dass der Durchtritt der viskosen Lösungen durch die erfindungsgemäße Vorrichtung gewährleistet ist. Der besondere Effekt der Erfindung tritt jedoch dadurch zu Tage, dass das Volumen (300) in den angegebenen bevorzugten Bereichen bleibt, d.h. dass der Kanal bei weiterem Durchmesser kürzer ausgeführt wird.

Ein weiterer wesentlicher Effekt des geringen Volumens (300) ist, dass die Gefahr von Verschleppungen reduziert ist.

Die Verbindung der Pipette mit der ersten Öffnung in Abschnitt (A) des Körpers kann auf verschiedene Weise erfolgen. Die Verbindung ist als fluidische Verbindung ausgeführt, weswegen eine Flüssigkeit durch die erste Öffnung in Abschnitt A des Körpers und die Austrittsöffnung der Pipette in das Pipettenvolumen überführt werden kann. Die fluidische Verbindung zwischen der Pipette (C) und Abschnitt (A) ist dichtend und stellt so sicher, dass an der Grenze dieser Elemente keine Flüssigkeit austritt. In einer bevorzugten Ausführungsform ist die Verbindung der ersten Öffnung in Abschnitt (A) des Körpers mit der Austrittsöffnung der Pipette (C) ausgewählt aus der Gruppe bestehend aus einer Steckverbindung, einer Schraubverbindung, einer Verbindung durch Kleben und einer Verbindung durch Schweißen.

Insbesondere im Fall von Steckverbindungen wird der Anwender darauf achten, dass der Druck, mit dem Flüssigkeit bewegt wird, begrenzt wird, um ein Abspringen des aufgesteckten Körpers von der Pipette zu verhindern. Faktoren, die den erforderlichen Pipettierdruck beeinflussen, sind Viskosität der zu bewegenden Flüssigkeiten, sowie der Durchmesser des Kanals in Abschnitt (B) und die Weite der zweiten Öffnung.

Das Filter (600) kann in einem einfach gestalteten Fall dadurch fixiert werden, dass die in die erste Öffnung eingesteckte Austrittsöffnung der Pipette (C) mit ihrer Kante den Rand des Filters gegen die Wand (210) drückt. In dieser Ausführungsform ist überhaupt keine weitere Halterung erforderlich.

In einer weiteren bevorzugten Ausführungsform wird das Filter (600) auf beiden Seiten der Scheibe durch ein oder zwei Stützgitter (500), (400) gehalten, wobei das Stützgitter (400) zwischen Filter (600) und Wand (210) optional ist. Im Fall nur eines Gitters ist dieses als Stützgitter (500) zwischen der Filterscheibe und der ersten Öffnung angebracht. In diesem Fall unterstützt die Wand (210) das Filter (600) von der gegenüberliegenden Seite. Sofern diese Anordnung nicht ausreicht, um eine unerwünschte Verlagerung des Filters beim Durchtritt einer flüssigen Phase zu verhindern, kann in einer weiteren bevorzugten Ausführungsform ein weiteres Gitter zwischen Filterscheibe und Wand (210) als Stützgitter (400) angebracht werden. Es ist weiterhin bevorzugt, dass das Stützgitter (500) mit der Wand (100) verbunden ist und das Stützgitter (400), sofern vorhanden, mit der Wand (100) oder der Wand (210) verbunden ist.

In einer weiteren bevorzugten Ausführungsform der Erfindung ist das Filter (600) eine rund (kreisrund) geformte Scheibe. Die Form, bzw. der Durchmesser dieser Scheibe wird so gewählt, dass die Außenkante des Filters im Wesentlichen bündig mit der nach innen weisenden Seite der Wand (100) abschließt.

Die Pipette (C) ist ein röhrenförmiger Körper, der im Ganzen oder an der Austrittsöffnung konisch geformt und dadurch verengt ist. Für die Erfindung ist es unwesentlich, ob die ihr gemäße Vorrichtung an einer Einkanal- oder einer Mehrkanal-Pipette verwirklicht ist. Jedoch sind Mehrkanal-Pipetten bevorzugt, da sie ein paralleles Bearbeiten einer Vielzahl von Proben erlauben.

In einer bevorzugten Ausführungsform umfasst die Pipette (C) eine wechselbare Pipettenspitze. In diesem Fall ist die Austrittsöffnung der Pipettenspitze fluidisch verbunden ist mit der ersten Öffnung in Abschnitt (A) des Körpers.

In der Regel sind die in biologischem Material enthaltenen Nukleinsäuren in Komplexen mit Proteinen gebunden und in Kompartimenten lokalisiert, aus denen sie freigesetzt werden müssen. Dies erfolgt durch einen Prozess, der als Lyse bezeichnet wird. Bekannte Lyseverfahren verwenden wässrige Lysepuffer, die einzeln oder kombiniert ein oder mehrere chaotrope Verbindungen (besonders verbreitet ist die Verwendung von Guanidiniumsalzen), Detergentien, Zellwände abbauende Enzyme und Proteasen enthalten. Durch Inkubation des biologischen Materials in Lysepuffer werden die in dem Material befindlichen Nukleinsäuren freigelegt und von anhaftenden Proteinen befreit. Für den Fall, dass das Lysat unlösliche Bestandteile enthält, werden diese entfernt und dadurch ein geklärter Überstand bereit gestellt.

Im Anschluss an den Lyseschritt können die in Lösung gebrachten Nukleinsäuren (Analyt) über reversible Immobilisierung (Adsorption) an die Festphase mit einer für Nukleinsäuren affinen Oberfläche, beispielsweise Silica, aus dem Lysat abgetrennt werden. Bei der Verwendung von Festphasen mit einer Silica Oberfläche ist es ohne Weiteres möglich, die in den bereits bekannten High Pure Kits (Roche Applied Science, Roche Diagnostics GmbH, Mannheim, Deutschland) beschriebenen Reagenzien-Lösungen und Prozessschritte in angepasster Weise anzuwenden.

In einer bevorzugten Ausführungsform der Erfindung besteht die affine Festphase im Filter in Abschnitt (A) aus einem Vlies mit mineralischer Oberfläche, wobei besagte Oberfläche geeignet ist, Nukleinsäuren reversibel zu binden. Bevorzugte Oberflächen der affinen Festphase enthalten Silica Gruppen. Poröse Membranen und Reagenzien zur Bindung von Analyten sind dem Fachmann hinreichend bekannt. So kann z.B. zur Bindung von Nukleinsäuren ein aus der High Pure Produkt Linie (Roche Applied Science) bekanntes Glasfaserflies VLS403 verwendet werden. Weitere geeignete Festphasen zur Bindung von Nukleinsäuren sind z.B. Cellulose-Membranen oder derivatisierte Cellulose-Membranen, die in ihrer Anwendung in US 2005/0112658 beschrieben sind. Cellulose Membranen und Derivate, die den Anforderungen der Erfindung genügen, werden auch von der Firma Schleicher & Schuell vertrieben und tragen die Bezeichnung OE67 oder ST69 und RC60. Es können weiterhin Membranen eingesetzt werden die chemisch so derivatisiert sind, dass sie positiv geladenen Gruppen über ein Linker Molekül gebunden tragen. Diese Systeme sind z.B. beschrieben in WO 2004/055213 oder EP 1036082 (DNA Research Innovation) und US 2005-0106576 (Lumigen). An diese positive Ladungen bindet die Nukleinsäure bei geeigneten pH-Wert und Salzbedingungen wie hinreichend bekannt ist. Nach einem Wasch-Schritt mit ebenfalls bekannten Puffern werden die Nukleinsäuren eluiert. Dies kann einerseits durch eine Änderung der positiven Ladung durch den Einfluss des pH-Wertes des Elutions-Puffers geschehen oder dadurch, dass das Linker Molekül in geeigneter Weise gespalten wird.

Nach der Trennung der Festphase von dem Lysat wird die gebundene DNA und/oder RNA mit geeigneten Waschpuffern gewaschen und dadurch Verunreinigungen von den gebundenen Nukleinsäuren entfernt. Zum Schluss werden die Nukleinsäuren mit Niedrigsalzpuffer oder mit Wasser von der Festphase gelöst (eluiert). Die Zusammensetzung des Elutionspuffers erlaubt in der Regel die direkte Verwendung der darin gelösten Nukleinsäuren in nachfolgenden bioanalytischen Messmethoden, beispielsweise der Amplifikation einer Nukleinsäure Zielsequenz mittels der Polymerase Kettenreaktion (PCR). Das Volumen des Elutionspuffers wird bevorzugt niedrig gewählt, um so eine Konzentrierung der Nukleinsäuren zu bewirken. Typischerweise beträgt das Elutionsvolumen 0,01-10% des Volumens des Probenmaterials vor dem Zusetzen von Lysereagenz.

Ein weiterer Aspekt der Erfindung ist demnach ein Verfahren zur Reinigung von Nukleinsäuren unter Verwendung einer erfindungsgemäßen Vorrichtung. Das Verfahren umfasst zunächst das Ansaugen und Ausstoßen eines wässrigen Lysepuffers mit darin gelösten Nukleinsäuren und einer oder mehrere Substanzen, die eine Adsorption der Nukleinsäuren aus der Flüssigphase an die Festphase fördern. Dies kann beispielsweise in Gegenwart von Guanidiniumsalz in einem Konzentrationsbereich von 0.5 M bis 5 M im Lysepuffer erfolgen. Darüber hinaus wird die Adsorption der Nukleinsäuren durch die Gegenwart von Alkohol (bevorzugt Ethanol und/oder Isopropanol) in einem bevorzugten Konzentrationsbereich von 1 % bis 60% [v/v] im Lysepuffer gefördert.

Der Lysepuffer gelangt beim Ansaugen durch den Körper mit den Abschnitten (A) und (B) in die Pipette und verlässt diese wieder beim Ausdrücken durch den besagten Körper. Dabei werden die Nukleinsäuren während des Durchtritts der Flüssigphase durch das Filter mit der Oberfläche der affinen Festphase in Kontakt gebracht und daran adsorbiert.

In einem nächsten Schritt erfolgen Ansaugen und Ausstoßen eines Waschpuffers, wobei der Waschpuffer eine oder mehrere Substanzen enthält, die dem Ablösen der adsorbierten Nukleinsäuren von der Festphase entgegenwirken, beispielsweise Ethanol in einem wässrigen Puffer. Der Waschpuffer gelangt beim Ansaugen durch den Körper mit den Abschnitten (A) und (B) in die Pipette und verlässt diese wieder beim Ausdrücken durch den besagten Körper. Während des Waschschritts treten Verunreinigungen während des Durchtritts der Flüssigphase durch das Filter in die Flüssigphase über.

In einem nächsten Schritt erfolgen Ansaugen und Ausstoßen eines Elutionspuffers, wobei der Elutionspuffer das Ablösen von adsorbierten Nukleinsäuren von der Festphase bewirkt. Der Elutionspuffer gelangt beim Ansaugen durch den Körper mit den Abschnitten (A) und (B) in die Pipette und verlässt diese wieder beim Ausdrücken durch den besagten Körper. Während des Durchtritts der Flüssigphase durch das Filter werden die Nukleinsäuren in die Flüssigphase überführt (eluiert). Das Eluat mit den gereinigten Nukleinsäuren wird aufgefangen und kann weiter bearbeitet oder unter geeigneten Bedingungen gelagert werden.

Neue Methoden in der Parallelisierung von Testverfahren, z. B. die Möglichkeit des Durchführens der PCR in Mikrowellplatten mit 384 oder sogar 1536 Kavitäten, machen auch entsprechende Entwicklungen für die Anpassung des Probendurchsatzes in der Reinigung des Analyten erforderlich. Mit Hilfe der erfindungsgemäßen Vorrichtung wird den Anforderungen der Miniaturisierung und der Vereinfachung von Arbeitsschritten in besonderem Maß Rechnung getragen. Das vorgeschlagene Format für die Isolierung des Analyten erlaubt sowohl die schnelle und einfache Handhabung für einzelne Proben durch Verwendung mit einer herkömmlichen Laborpipette, als auch die Parallelisierung durch Einsatz einer Mehrkanalpipette. Die einfache Automatisierung ist mit jedem herkömmlichen Labor-Roboter, der einen Pipettierkopf für Wechselspitzen enthält, direkt übertragbar. So kann bei Verwendung von 96er, 384er oder 1536er Pipettierköpfen eine sehr schnelle Isolierung des Analyten erfolgen.

Zusammengefasst erlaubt die erfindungsgemäße Vorrichtung die schnelle und einfache Isolierung eines Analyten aus einer biologischen Probe, da alle Schritte auf den Transfer, Mischen und Inkubieren von Flüssigkeiten reduziert sind. Alle Separations-Schritte sind in den Flüssigkeitstransfer integriert. Durch Parallelisierung ist ein einfaches upscaling des Probendurchsatzes mit vorhandener Laborautomation gegeben. Die Laborautomation kommt ohne zusätzliche Separationsmodule, wie Zentrifugation, Magnetseparation und Vakuumabsaugung aus wodurch die Instrumentierung sich drastisch verbilligt und weniger wartungsanfallig wird. Gleichzeitig verkürzt sich der Zeitaufwand durch Integration der Immobilisierung des Analyten in den Flüssigkeit-Transfer.

Die vorgehende Beschreibung, die zitierten Publikationen und die Abbildungen erläutern die Erfindung, deren Schutzumfang sich aus den Patentansprüchen ergibt, weiter. Die beschriebenen Verfahren sind als Beispiele zu verstehen, die auch noch nach Modifikationen den Gegenstand der Erfindung beschreiben.

### Beschreibung der Figuren

- **Figur 1**: Schematische Zeichnung eines Querschnitts: Dargestellt sind der untere Abschnitt des Körpers einer Pipettenspitze (C), deren Wand (700) konisch geformt sein kann und am Auslass (800) endet. Das Ende des Körpers der Pipettenspitze ist fluidisch verbunden mit dem oberen Teil eines Aufsatzes bestehend aus den Abschnitten (A) und (B), wobei der Aufsatz nach oben und unten hin offen ist und das Durchströmen von Flüssigkeit erlaubt. Abschnitt (A) umfasst eine Wand (100) mit im Wesentlichen zylindrischer Form, die nach oben hin offen ist. Sie ist mit dem Auslass der Pipettenspitze so verbunden, dass Flüssigkeit durch die Abschnitte (A) und (B) aus dem und/oder in den Pipettenkörper bewegt werden kann, ohne dass seitlich Flüssigkeit austritt. Die in Abschnitt (A) nach unten weisende Öffnung des durch die Wand (100) begrenzten Hohlkörpers wird im unteren Teil des Aufsatzes (B) duch eine weitere Wand (210) begrenzt. Diese schließt sich an die Wand (100) an und verjüngt sich mittig zu einem im nach unten offenen Auslass mit einem Innenraum (300). Die den Auslass nach der Verjüngung umgebende Wand (200) ist im wesentlichen zylindrisch geformt und weist einen geringeren Durchmesser als die Wand (100) auf. Quer zur Längsachse (L) ist in Abschnitt (A) ein scheibenförmiges Filter (600) angeordnet, das oberhalb und unterhalb durch mit der Wand (100) verbundene Stützgitter (500), (400) gehalten wird. Das untere Stützgitter (400) ist optional und kann fehlen. Stützgitter (400) kann, sofern vorhanden, auch mit Wand (210) verbunden sein. Die Filterscheibe (600) ist rund, wobei die Außenkante des Filters typischerweise bündig mit der nach innen weisenden Seite der Wand (100) abschließt.

## Patentansprüche

1. Vorrichtung umfassend eine Pipette (C) und einen Körper mit den direkt aneinander anschließenden Abschnitten (A) und (B), wobei
der Körper an den zwei am weitesten voneinander entfernten gegenüber liegenden und quer zur Längsachse (L) angeordneten Seiten offen ist und das Durchströmen von Flüssigkeit entlang der Längsachse durch die erste Öffnung hin zur zweiten Öffnung und durch diese erlaubt;
Abschnitt (A) eine im Wesentlichen zylindrische Wand (100) umfasst, die zu einer Seite hin ohne Verengung offen ist und die die erste Öffnung in Abschnitt (A) bildet;
die erste Öffnung in Abschnitt (A) fluidisch verbunden ist mit der Austrittsöffnung der Pipette (C);
quer zur Längsachse (L) in Abschnitt (A) ein scheibenförmiges Filter (600) angeordnet ist und das Filter eine Festphase mit affinen Gruppen auf ihrer Oberfläche (affine Festphase) enthält;
im Abschnitt (B) die der ersten Öffnung gegenüber liegende Seite duch eine weitere Wand (210) begrenzt wird, wobei die Wand (210) sich an die Wand (100) anschließt und mittig eine kreisförmige zweite Öffnung bildet, die von einer im wesentlichen zylindrischen Wand (200) umgeben ist, wobei die Wand (200) einen geringeren Durchmesser als die Wand (100) aufweist;
das in Abschnitt (B) zwischen der Filterscheibe (600) und der zweiten Öffnung befindliche Volumen (300) im Bereich von 0.01% bis 5% des maximalen Transfervolumens der Pipettenspitze beträgt; und
im Abschnitt (B) der Durchmesser der zweiten Öffnung im Bereich von 0,5 mm bis 2 mm mißt.

2. Vorrichtung gemäß Anspruch 1, **dadurch gekennzeichnet, dass** die affine Festphase im Filter in Abschnitt (A) aus einem Vlies mit mineralischer Oberfläche besteht, wobei besagte Oberfläche geeignet ist, Nukleinsäuren reversibel zu binden.

3. Vorrichtung gemäß einem der Ansprüche 1 und 2, **dadurch gekennzeichnet, dass** das Filter (600) auf beiden Seiten der Scheibe durch ein oder zwei Stützgitter (500), (400) gehalten wird, wobei das Stützgitter (400) zwischen Filter (600) und Wand (210) optional ist.

4. Vorrichtung gemäß Anspruch 3, **dadurch gekennzeichnet, dass** das Stützgitter (500) mit der Wand (100) verbunden ist und das Stützgitter (400), sofern vorhanden, mit der Wand (100) oder der Wand (210) verbunden ist.

5. Vorrichtung gemäß einem der Ansprüche 1 bis 4, **dadurch gekennzeichnet, dass** die Filterscheibe (600) rund ist und die Außenkante des Filters im Wesentlichen bündig mit der nach innen weisenden Seite der Wand (100) abschließt.

6. Vorrichtung gemäß einem der Ansprüche 1 bis 5, **dadurch gekennzeichnet, dass** die Pipette (C) eine wechselbare Pipettenspitze umfasst und die Austrittsöffnung der wechselbaren Pipettenspitze fluidisch verbunden ist mit der ersten Öffnung in Abschnitt (A) des Körpers.

7. Vorreichtung gemäß einem der Ansprüche 1 bis 6, **dadurch gekennzeichnet, dass** der Abstand zwischen der zweiten Öffnung und der der zweiten Öffnung zugewandten Seite der Filterscheibe (600) im Bereich von 1,5 cm bis 0,1 cm misst.

8. Vorrichtung gemäß einem der Ansprüche 1 bis 7, **dadurch gekennzeichnet, dass** das Volumen (300) von Abschnitt (B) im Bereich von 0.1 % bis 5% des maximalen Transfervolumens der Pipettenspitze beträgt.

9. Vorrichtung gemäß Anspruch 8, **dadurch gekennzeichnet, dass** das Volumen (300) von Abschnitt (B) im Bereich von 0.5% bis 2% des maximalen Transfervolumens der Pipettenspitze beträgt.

10. Vorrichtung gemäß einem der Ansprüche 1 bis 9, **dadurch gekennzeichnet, dass** die Verbindung der ersten Öffnung in Abschnitt (A) des Körpers mit der Austrittsöffnung der Pipette (C) ausgewählt ist aus der Gruppe bestehend aus einer Steckverbindung, einer Schraubverbindung, einer Verbindung durch Kleben und einer Verbindung durch Schweißen.

11. Vorrichtung gemäß einem der Ansprüche 6 bis 10, weiterhin umfassend einen Mehrkanal-Pipettierkopf für Wechselspitzen.

12. Vorrichtung gemäß Anspruch 11, weiterhin umfassend eine Mikrowellplatte mit einer Mehrzahl an Kavitäten.

13. Vorrichtung gemäß einem der Ansprüche 1 bis 12, weiterhin umfassend einen wässrigen Lysepuffer enthaltend gelöste Nukleinsäuren und Substanzen, die eine Adsorption von Nukleinsäuren aus der Flüssigphase an die Oberfläche des Filters (600) fördern.

14. Verwendung einer Vorrichtung gemäß einem der Ansprüche 1 bis 13 zur Reinigung von Nukleinsäuren.

15. Verfahren zur Darstellung gereinigter Nukleinsäuren unter Verwendung einer Vorrichtung gemäß einem der Ansprüche 1 bis 13 umfassend die Schritte
(a) Ansaugen und Ausstoßen eines wässrigen Lysepuffers enthaltend (i) gelöste Nukleinsäuren und (ii) eine oder mehrere Substanzen, die eine Adsorption von Nukleinsäuren aus der Flüssigphase an eine zur reversiblen Bindung der Nukleinsäure geeignete Festphase fördern,
wobei der Lysepuffer beim Ansaugen durch den Körper mit den Abschnitten (A) und (B) in die Pipette (C) gelangt, diese beim Ausdrücken durch den besagten Körper wieder verlässt, und Nukleinsäuren während des Durchtritts der Flüssigphase durch das Filter an der Oberfläche der affinen Festphase adsorbiert werden;
(b) Ansaugen und Ausstoßen eines Waschpuffers, wobei der Waschpuffer eine oder mehrere Substanzen enthält, die dem Ablösen der adsorbierten Nukleinsäuren von der Festphase entgegenwirken, und wobei der Waschpuffer beim Ansaugen durch den Körper mit den Abschnitten (A) und (B) in die Pipette gelangt, diese beim Ausdrücken durch den besagten Körper wieder verlässt, und Verunreinigungen während des Durchtritts der Flüssigphase durch das Filter in die Flüssigphase übertreten;
(c) Ansaugen und Ausstoßen eines Elutionspuffers, wobei der Elutionspuffer das Ablösen von adsorbierten Nukleinsäuren von der Festphase bewirkt, und wobei der Elutionspuffer beim Ansaugen durch den Körper mit den Abschnitten (A) und (B) in die Pipette gelangt, diese beim Ausdrücken durch den besagten Körper wieder verlässt, und Nukleinsäuren während des Durchtritts der Flüssigphase durch das Filter in die Flüssigphase übertreten;
(d) Auffangen des Eluates enthaltend die gereinigten Nukleinsäuren.
